# EUROPEAN PATENT APPLICATION

(11) **EP 3 220 033 A1**
(43) Date of publication of application: **20.09.2017**
(21) Application number: 17160653.6
(22) Date of filing: 13.03.2017
(51) Int. Cl.: F16L 29/02, F16L 19/04

(54) **CONNECTOR FOR A HYDRAULIC BRAKING SYSTEM**

(30) Priority: 18.03.2016 IT UA20161806
(71) Applicant: CAMPAGNOLO S.R.L., 36100 Vicenza (IT)
(72) Inventor: MEGGIOLAN, Mario, I-36051 Creazzo (Vicenza) (IT); GANZAROLI, Alessandro, I-35135 Padova (IT); GORZA, Roberto, I-32034 Pedavena (Belluno) (IT)
(74) Representative: Porta, Checcacci & Associati S.p.A

(57) **Abstract**

The invention relates to a connector (10) for a hydraulic braking system comprising a first coupling terminal (21) equipped with an annular abutment surface (14). A coupling sleeve (40) comprising a first axially outer annular portion (41), receiving the first coupling terminal (21), an annular wall (43), equipped with a first annular abutment surface (44) to receive the annular abutment surface (14) of the first coupling terminal (21) in abutment, and a second axially outer annular portion (42), axially opposite the first annular portion (41) to be coupled with a component of the hydraulic braking system. A first annular locking element (80) is arranged in a radially outer position with respect to the tube (11) and to the first coupling terminal (21) and is axially moveable between a rest position in which it is mechanically decoupled from the component of the hydraulic braking system and a locking position in which it is mechanically coupled with the component of the hydraulic braking system. A first annular hydraulic sealing element (70) is configured to be activated by the first annular locking element (80) when in the locking position. The annular abutment surface (14) of the first coupling terminal (21) is in abutment on the first annular abutment surface (44) of the coupling sleeve (40) when the first annular locking element (21) is in the rest position.

## Description

The present invention relates to a connector for a hydraulic braking system.

Preferably, such a connector is intended to be used in a hydraulic braking system for bicycles, more preferably racing bicycles.

Typically, the installation of hydraulic braking systems for bicycles requires the connection of a tube with a component of the hydraulic braking system, like for example another tube or a hydraulic actuator (for example a brake caliper or a hydraulic pump), in order to allow the passage of fluid (typically oil) from one tube to the other tube, or from the tube to the hydraulic actuator and, consequently, the activation/deactivation of the braking device.

Such a connection is obtained by using suitable connectors that must ensure both the mechanical seal (maintaining the mutual coupling) and the hydraulic seal (absence of fluid leaks) between the tube to be connected and the component of the hydraulic braking system during the entire life of the hydraulic braking system.

Furthermore, such connections must allow easy coupling of the tube with the component of the hydraulic braking system, since it is not always possible to ensure large work spaces around the connector during the assembly of the hydraulic braking system.

The Applicant has devised a connector in which the desired mechanical seal is achieved through mechanical couplings between some components of the connector, the desired hydraulic seal is obtained through a hydraulic sealing element suitably positioned with respect to the aforementioned components of the connector and wherein the mutual contact between a first component of the connector stably associated with the tube to be connected and a further component of the connector ensures the correct positioning of the tube to be connected with respect to the component of the hydraulic braking system to which the tube must be connected.

In the rest of the description and in the following claims, the terms "radial" and "axial" are used with reference to directions respectively perpendicular and parallel (or coinciding) to a longitudinal axis of the connector.

The expressions "radially inner" and "radially outer" respectively indicate a positioning closer to and further from the aforementioned longitudinal axis.

The expressions "axially inner" and "axially outer" respectively indicate a positioning closer to and further from a reference plane perpendicular to the longitudinal axis of the connector, passing through the connector and taken at the free end section of the part of connector constrained to the tube and facing the component of the hydraulic braking system when the connector is in operative position.

The present invention relates to a connector for a hydraulic braking system, the connector comprising:
- a first coupling terminal, associated with a tube of a hydraulic braking system, comprising an axially inner annular portion equipped with an annular abutment surface;
- a coupling sleeve comprising a first axially outer annular portion configured to receive said axially inner annular portion of the first coupling terminal in a radially inner position; said coupling sleeve comprising an annular wall projecting radially internally, arranged axially internally with respect to said first axially outer annular portion, and equipped with a first annular abutment surface configured to receive said annular abutment surface of the first coupling terminal in abutment; said coupling sleeve comprising a second axially outer annular portion, and axially opposite said first annular portion, configured to be coupled with a component of the hydraulic braking system;

- a first annular locking element configured to be arranged in radially outer position with respect to the tube and to the first coupling terminal and axially moveable between a rest position in which it is mechanically decoupled from said component of the hydraulic braking system and a locking position in which it is mechanically coupled with said component of the hydraulic braking system;
- a first annular hydraulic sealing element, configured to be arranged in radially outer position with respect to said tube of the hydraulic braking system and in a position axially interposed between the coupling sleeve and the first annular locking element, and configured to be activated by said first annular locking element when in the constraining condition;
wherein said annular abutment surface of the first coupling terminal can be abutted on said first annular abutment surface of the coupling sleeve when the first annular locking element is in the rest position.

In accordance with the present invention, the interaction between the first coupling terminal and the coupling sleeve allow easy positioning of the tube on the component of the hydraulic braking system to be connected. In particular, the abutment of the annular abutment surface of the first coupling terminal against the first annular abutment surface of the coupling sleeve allows the correct positioning of the first coupling terminal, and therefore of the tube, on the component of the hydraulic braking system to which the tube must be connected. By virtue of the fact that such correct positioning does not necessarily require that the first annular locking element be mechanically constrained to the component of the hydraulic braking system, quick and easy positioning of the tube on the component of the hydraulic braking system is ensured by leaving the achievement of the mechanical and hydraulic stability of the connection to a subsequent locking operation that provides for the movement of the first annular locking element in the locking position.

Concerning this, the mechanical seal of the tube on the component of the hydraulic braking system is carried out by the first annular locking element when the latter is in the locking position and the desired hydraulic seal is ensured by the first annular hydraulic sealing element axially interposed between the coupling sleeve and the first annular locking element.

The present invention can comprise one or more of the following preferred features, taken individually or in combination.

Preferably, when the first annular locking element is in the locking condition, the first annular hydraulic sealing element is in axial abutment against said coupling sleeve and, in axially opposite position, against the first annular locking element and undergoes a deformation by chamfering at an axially inner end portion adjacent to the coupling sleeve.

In this way, the desired hydraulic seal is ensured by the chamfering of the first annular hydraulic sealing element at the coupling sleeve.

Preferably, the first annular hydraulic sealing element further undergoes a deformation by chamfering at an axially outer end portion opposite said axially inner end portion.

Such a provision makes it possible to increase the hydraulic seal ensured by the first annular hydraulic sealing element.

Preferably, the coupling sleeve and the first annular locking element are made of materials having greater hardness than that of the material from which the first annular hydraulic sealing element is made.

In this way it is made easier to chamfer the end portions of the first annular hydraulic sealing element once they go into axial abutment against the first annular locking element and the coupling sleeve.

More preferably, the coupling sleeve, the first annular locking element and the first coupling terminal are made from steel or aluminum, whereas the first annular hydraulic sealing element is made from brass. The use of aluminum with respect to steel can be preferable to keep down the weight of the connector.

The maximum radial bulk of the first coupling terminal is substantially equal to the radial bulk of the tube.

In this way, the first coupling terminal can be engaged on the tube before it is installed on the bicycle, since at the installation step of the tube it is ensured that the first terminal can pass through any opening through which the tube passes.

In some embodiments of the invention, the first coupling terminal comprises, at an intermediate axial portion thereof, a radially outer surface provided with a plurality of throats.

Advantageously, such throats are intended to receive part of the end portion deformed by chamfering of the first annular hydraulic sealing element, thus increasing the hydraulic seal of the connector and at the same time also improving the mechanical seal thereof.

Preferably, the connector comprises first coupling members configured to be radially interposed between said first coupling terminal and said coupling sleeve to hold said first coupling terminal at said coupling sleeve when said annular abutment surface of the first coupling terminal abuts on said annular abutment surface of the coupling sleeve.

The mechanical coupling between the coupling sleeve and the first coupling terminal allows the two components of the connector to be held in position, facilitating the subsequent locking operations through movement of the first annular locking element in the coupling position.

Preferably, said first coupling members comprise a locking ring housed in a first recess formed in said axially inner annular portion of said first coupling terminal in a radially outer position thereof and able to be housed, when said annular abutment surface of the first coupling terminal is in abutment on said annular abutment surface of the coupling sleeve, in a second recess formed in said first axially outer annular portion of said coupling sleeve in a radially inner position thereof.

The coupling between the coupling sleeve and the first coupling terminal is thus made by a snap coupling that allows a rapid engagement of the first coupling terminal in the coupling sleeve, further increasing the ease of installation of the connector.

In some embodiments of the invention, the connector comprises a first sealing slider axially slidable in said first coupling terminal between a first position in which it inhibits the passage of fluid in said first coupling terminal and a second position in which it allows the passage of fluid in said first coupling terminal; said annular wall moving said first sealing slider from the first to the second position when said annular abutment surface of the first coupling terminal is in abutment on said annular abutment surface of the coupling sleeve.

Advantageously, fluid is prevented from accidentally coming out from the tube by the fact that the first sealing slider closes the first coupling terminal in a fluid-tight manner, preventing leaks of fluid from the tube when it is not connected. Moreover, the interaction between first sealing slider and annular wall of the coupling sleeve allows fluid to come out from the tube towards the component of the hydraulic braking system to which the tube is connected only when the first coupling terminal is in abutment on the annular wall of the coupling sleeve. In this way, it is ensured that the oil of the hydraulic braking system can come out from the tube only when it is already positioned, at least temporarily, on the component of the hydraulic braking system.

Preferably, said first sealing slider comprises, in axially inner position, a projection configured to abut said first annular abutment surface of the coupling sleeve when said annular abutment surface of the first coupling terminal is in abutment on said first annular abutment surface of the coupling sleeve.

In this way, the movement of the first sealing slider from the first position to the second position takes place substantially at the same time as the axial abutment of the first coupling terminal on the first annular abutment surface of the coupling sleeve is reached.

Preferably, the connector further comprises a first elastic member active on said first sealing slider to hold it in the first position, the movement of the first sealing slider in the second position being counteracted by said first elastic member.

Such an elastic member ensures that the first position of the first sealing slider is a stable position and that the first sealing slider cannot accidentally move into the second position.

Preferably, the elastic member is active between an axially outer portion of the first sealing slider and an axially outer portion of the first coupling terminal. In this way, the elastic element pushes the first sealing slider towards the axially inner portion of the first coupling terminal.

Preferably, said first sealing slider comprises an annular gasket inserted in a radially outer annular housing of the first sealing slider and said first coupling terminal comprises a radially inner annular housing delimited in the axially inner direction by a sealing wall. The annular gasket contacts said sealing wall in a fluid-tight manner when the first sealing slider is in the first position and is moved axially away from said sealing wall when the first sealing slider is in the second position.

Such a gasket ensures the fluid seal between the first sealing slider and the first coupling terminal, preventing possible fluid present in the tube from coming out from the tube itself when the first sealing slider is in the first position.

Preferably, the first coupling terminal comprises a stop shoulder able to be abutted by a stop tooth of said first sealing slider when the latter is in the second position. Such a stop shoulder limits the stroke of the first sealing slider in an axially outer direction when a pressure is exerted on the first sealing slider in such a direction, for example by the pressurized fluid in the component of the hydraulic braking system connected to the tube.

In a first embodiment of the invention, the component of the hydraulic braking system intended to be coupled with the second axially outer annular portion of the coupling sleeve comprises a second coupling terminal, associated with a further tube of the hydraulic braking system, comprising an axially inner annular portion equipped with an annular abutment surface; the second annular portion of said coupling sleeve being configured to receive said axially inner annular portion of the second coupling terminal in a radially inner position.

In this embodiment, the connector therefore connects together two tubes of the hydraulic braking system.

Preferably, in this embodiment of the invention said annular wall of the coupling sleeve is equipped with a second annular abutment surface, axially opposite the first annular abutment surface, configured to receive said annular abutment surface of the second coupling terminal in abutment.

In this way, the second tube can be easily connected to the first by carrying out identical coupling operations of the two tubes with the coupling sleeve.

Preferably, in this embodiment the connector comprises a second annular locking element configured to be arranged in radially outer position with respect to the further tube and moveable between a rest position in which it is mechanically decoupled from the first annular locking element and a locking position in which it is mechanically constrained to the first annular locking element. The annular abutment surface of the second coupling terminal is in abutment on said second annular abutment surface of the coupling sleeve when the second annular locking element is in the rest position.

This feature allows quick and easy positioning of the second tube on the coupling sleeve and thus easy connection to the first tube.

Preferably, in this embodiment the connector comprises second mechanical coupling members configured to be radially interposed between said second coupling terminal and said coupling sleeve to hold said second coupling terminal at said coupling sleeve when said annular abutment surface of the second coupling terminal is in abutment on said second annular abutment surface of the coupling sleeve.

Preferably, the second coupling members comprise a locking ring housed in a first recess formed in said axially inner annular portion of said second coupling terminal in a radially outer position thereof and able to be housed, when said annular abutment surface of the second coupling terminal is in abutment on said second annular abutment surface of the coupling sleeve, in a second recess formed in said second axially outer annular portion of said coupling sleeve in a radially inner position thereof.

In this way, the coupling between the second coupling terminal and the coupling sleeve is also of the snap type, allowing quick and effective preliminary mechanical coupling between these two components.

Preferably, in this embodiment the connector further comprises a second sealing slider axially slidable in the second coupling terminal between a first position in which it inhibits the passage of fluid in the second coupling terminal and a second position in which it allows the passage of fluid in the second coupling terminal; said second sealing slider being in axial abutment against said second annular abutment surface of the coupling sleeve when said second slider is in the second position, and in which said annular wall moves said second sealing slider from the first to the second position.

In this way, it is ensured that there is a fluid seal of the second tube even when it is not yet engaged on the coupling sleeve, avoiding undesired oil leaks.

Preferably, in this embodiment the second sealing slider comprises, in an axially inner position, a projection configured to abut said second annular abutment surface of the coupling sleeve when the annular abutment surface of the second coupling terminal abuts on said second annular abutment surface of the coupling sleeve.

In this way, the movement of the second sealing slider from the first position to the second position takes place substantially at the same time as the axial abutment of the second coupling terminal on the second annular abutment surface of the coupling sleeve is reached.

Preferably, in this embodiment the connector further comprises a second elastic member active on said second sealing slider to hold it in the first position, the movement of the first sealing slider into the second position being counteracted by said second elastic member.

Such an elastic member ensures that the first position of the second sealing slider is a stable position and that the second sealing slider cannot accidentally move into the second position.

Preferably, the second elastic member is active between an axially outer portion of the second sealing slider and an axially outer portion of the second coupling terminal. In this way, the second elastic element pushes the second sealing slider towards the axially inner portion of the second coupling terminal.

Preferably, said second sealing slider comprises an annular gasket inserted into a radially outer annular housing of the second sealing slider and said second coupling terminal comprises a radially inner annular housing delimited in the axially inner direction by a sealing wall. The annular gasket contacts said sealing wall in a fluid-tight manner when the second sealing slider is in the first position and is axially away from said sealing wall when the second sealing slider is in the second position.

Such a gasket ensures the fluid seal between the second sealing slider and the second coupling terminal preventing possible fluid present in the tube from coming out from the tube itself when the second sealing slider is in the first position.

Preferably, in this embodiment the second coupling terminal comprises a stop shoulder able to be abutted by a stop tooth of said second sealing slider when the latter is in the second position. Such a stop shoulder limits the stroke of the second sealing slider in an axially outer direction when a pressure is exerted on the second sealing slider in such a direction, for example by the pressurized fluid of the hydraulic braking system.

In this embodiment, the connector preferably comprises a second annular hydraulic sealing element configured to be arranged in radially outer position with respect to the second coupling terminal and in a position axially interposed between the coupling sleeve and the second annular locking element. Preferably, when the second annular locking element is in the constrained condition, the second annular hydraulic sealing element is in axial abutment against said coupling sleeve and, in axially opposite position, against the second annular locking element and undergoes a deformation by chamfering at a first end portion adjacent to the coupling sleeve.

In this way, the hydraulic seal of the second tube is ensured by the chamfering of the second annular hydraulic sealing element at the coupling sleeve.

Preferably, the second annular hydraulic sealing element further undergoes a deformation by chamfering at a second end portion opposite said first end portion and adjacent to said second annular locking element.

Preferably, in this embodiment the second coupling terminal comprises, at an intermediate axial portion thereof, a radially outer surface provided with a plurality of throats.

Preferably, the second coupling terminal is identical to the first coupling terminal.

Preferably, the second sealing slider is identical to the first sealing slider.

Preferably, the second coupling members are identical to the first coupling members.

Preferably, the second annular hydraulic sealing element is identical to the first annular hydraulic sealing element.

In this way, it is possible to substantially reduce the complexity of the store of connectors since many of the constituent components are identical to each other and can be mounted without distinction on a first tube or on a second tube to be connected to the first.

In a second embodiment of the invention, the component of the hydraulic braking system coupled with the second axially outer annular portion of the coupling sleeve comprises a brake caliper and a sealing slider axially slidable in the second axially outer annular portion of the coupling sleeve between a first position in which it inhibits the passage of fluid in the brake caliper and a second position in which it allows the passage of fluid in the brake caliper.

Preferably, the sealing slider of the brake caliper is configured to axially abut against a portion of said annular abutment surface of said first coupling terminal and to move from the first to the second position.

In this way, the insertion of the first coupling terminal in the coupling sleeve causes the movement of the sealing slider of the brake caliper into the second position and places the tube in fluid communication with the brake caliper.

Preferably, the sealing slider of the brake caliper is structurally similar to, although its shape can be different from, the first and the second sealing slider of the first embodiment.

Preferably, in this embodiment the sealing slider of the brake caliper comprises a projection that extends axially away from an axially inner portion of the sealing slider of the brake caliper and configured to abut on the annular abutment surface of the first coupling terminal.

In this way, the movement of the sealing slider of the brake caliper from the first position to the second position takes place substantially at the same time as the axial abutment of the first coupling terminal on the first annular abutment surface of the coupling sleeve is reached.

Preferably, in this embodiment the connector further comprises a third elastic member, preferably a spring, active on said sealing slider of the brake caliper to hold it in the first position, the movement of the sealing slider of the brake caliper in the second position being counteracted by said elastic member.

Such a third elastic member ensures that the first position of the sealing slider of the brake caliper is a stable position and that the sealing slider of the brake caliper cannot accidentally move into the second position.

Preferably, the third elastic member is active between an axially outer portion of the sealing slider of the brake caliper and an axially outer portion of the second coupling terminal. In this way, the third elastic member pushes the sealing slider of the brake caliper towards the axially inner portion of the second coupling terminal.

Preferably, said sealing slider of the brake caliper comprises an annular gasket inserted in a radially outer annular housing of the second sealing slider and said second axially outer portion of the coupling sleeve comprises a radially inner annular housing delimited in the axially inner direction by a sealing wall. The annular gasket contacts said sealing wall in a fluid-tight manner when the sealing slider of the brake caliper is in the first position and is distal from said sealing wall when the sealing slider of the brake caliper is in the second position.

Such a gasket ensures the fluid-tight seal between the sealing slider of the brake caliper and the second axially outer portion of the coupling sleeve, preventing possible fluid present in the brake caliper from coming out when the sealing slider of the brake caliper is in the first position.

In this second embodiment, the coupling sleeve is inserted in a seat of the brake caliper and comprises a radially outer throat engaged by a toroidal hydraulic sealing gasket active on a radially inner wall of said seat of the brake caliper.

Such a hydraulic sealing gasket ensures the fluid-tight seal of the connection on the brake caliper side.

Preferably a locking pin is housed in a portion of a recess formed on the radially outer surface of the coupling sleeve in a radially outer position thereof and able to be housed in a hole formed in said seat of the brake caliper.

In an alternative embodiment in which the aforementioned first sealing slider is foreseen in the first coupling terminal, the sealing slider of the brake caliper is configured to abut axially against said first sealing slider when said first sealing slider is in the second position, and to move from the first to the second position.

In this way the first sealing slider and the sealing slider of the brake caliper cooperate directly to reach the respective second positions and allow the passage of fluid between tube and brake caliper.

In some embodiments, an accessory is foreseen arranged to protect the radially outer end of the first (and/or of the second coupling terminal).

In a first of such embodiments, such an accessory comprises an internally hollow containment body having a first end equipped with a first opening and comprising fastening members to fasten and constrain to said first coupling terminal (and/or to said second coupling terminal); said containment body comprising a second opening opposite the first opening and a pin fit-inserted in said second opening; said containment body being made from plastic material so as to be able to deform and disengage said fastening members from said first coupling terminal.

In this way, the free end of the first coupling terminal (and/or of the second if foreseen) is protected from accidental bumps that can occur before the installation of the connector. Such protection is particularly useful in the embodiments of the connector that foresee the first sealing slider (and/or the second sealing slider) slidably inserted inside the first coupling terminal (and/or the second coupling terminal), so that such a sealing slider is not exposed to accidental bumps that could compromise its integrity.

Preferably, the aforementioned pin comprises a bulb-shaped end inserted in the cavity defined by the containment body and of greater transversal dimensions than the second opening.

This feature facilitates the deformation of the containment body, making it easier to remove the containment body from the first coupling terminal (and/or from the second coupling terminal).

In a second embodiment of the accessory, a containment body is made from an elongated body wound in a spiral; at least one coil of a first end of said spiral being wound around at least one portion of said first coupling terminal (and/or of the second coupling terminal) and at least one coil of a second end of said spiral having a free end able to be gripped by a user.

Preferably, in this embodiment of the accessory, the coils that extend between the coil of the first end of the containment body and the coil of the second end of the containment body have decreasing diameters going from the first end towards the second end of the containment body. In this way, the containment body takes on a tapered shape towards the second end.

Preferably, all of the coils with the exception of the coil of the second end of the containment body are glued together so as not to be able to unwind accidentally.

Further features and advantages of the present invention will become clearer from the following detailed description of some preferred embodiments thereof, made with reference to the attached drawings, given for indicating and not limiting purposes. In such drawings:
- figure 1 is a perspective view in longitudinal section of a connector in accordance with a first embodiment of the present invention;
- figure 2 shows some details of the connector of figure 1 in a longitudinal section view;
- figure 3 shows some details of the connector of figure 1 in a longitudinal section view in a different operative configuration;
- figure 4 is a longitudinal section of a second embodiment of the connector of figure 1;
- figure 5 shows a detail of the connector of figure 4;
- figure 6 is a longitudinal section of a variant of the second embodiment of the connector of figure 1;
- figure 7 is a longitudinal section view of a component of the connector of figure 1 associated with an accessory thereof; and
- figure 8 is a perspective view of a variant embodiment of the accessory of figure 7.

In the attached figures, reference numeral 10 indicates a connector in accordance with the present invention. Such a connector 10 is preferably intended to be used in a hydraulic braking system for bicycles, more preferably racing bicycles.

The connector 10 is obtained through assembly of a plurality of distinct components, described hereinafter.

The connector 10 is used to connect, along a longitudinal axis X, an end portion of a tube with a component of the hydraulic braking system, like for example an end portion of another tube or a hydraulic caliper of the braking system, or a hydraulic pump of the braking system.

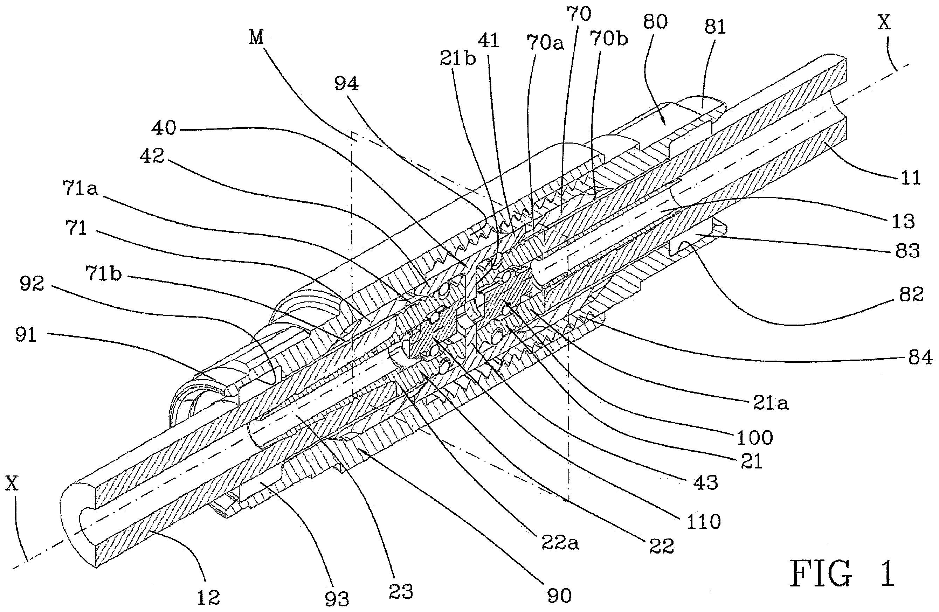

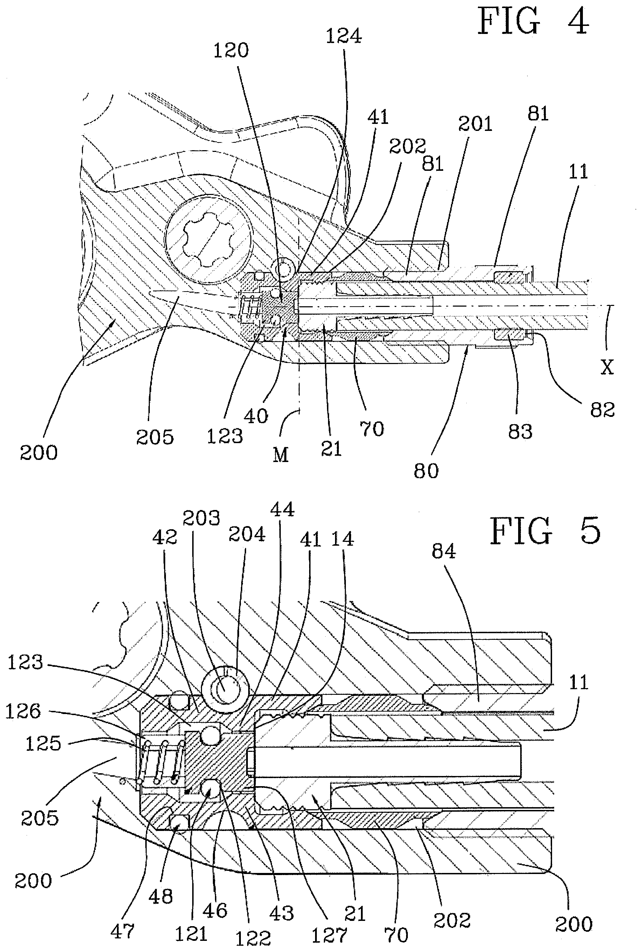

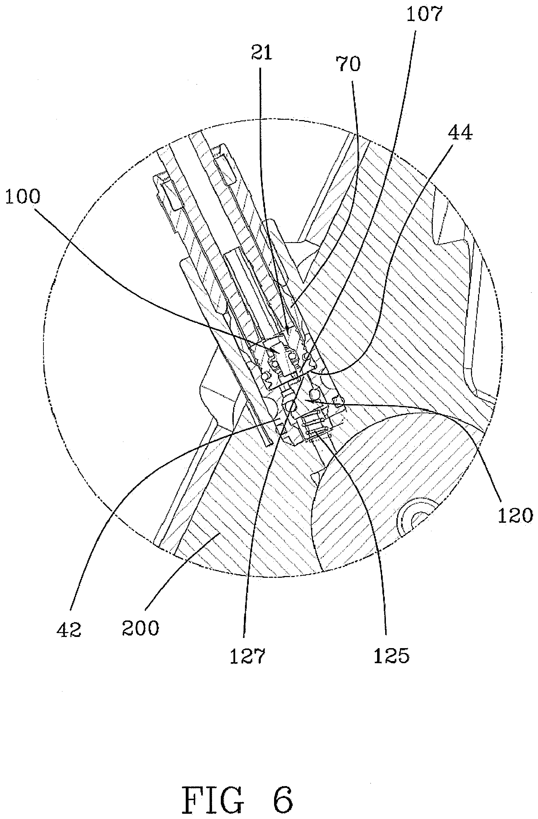

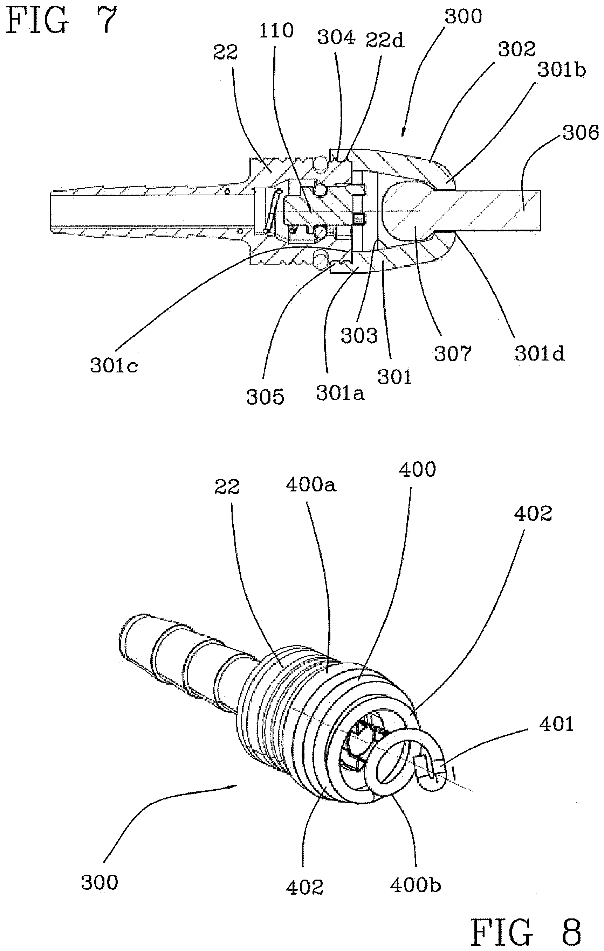

Hereinafter firstly the embodiment of the connector 10 illustrated in figures 1 to 3 will be described and then the embodiments illustrated in figures 4 and 5. The accessories according to figures 6 and 7 can be operated on both of the illustrated embodiments of the connector.

As illustrated in figures 1 and 4, in its operative configuration the connector 10 extends along the longitudinal axis X and has a reference plane M.

In a first embodiment illustrated in figures 1 to 3, the reference plane M is a middle plane for the connector.

In this embodiment, the connector 10 connects an end portion of a first tube 11 and an end portion of a second tube 12 of a hydraulic braking system.

As illustrated in figure 1, each end portion of tube 11, 12 is associated with a respective first coupling terminal 21 and second coupling terminal 22.

Preferably, the first and the second coupling terminal 21, 22 are made from steel or aluminum.

A tubular portion 13 of the first coupling terminal 21 is stably coupled with the end portion of the tube 11 of the hydraulic braking system and extends axially away from an axially outer portion 21a of the first coupling terminal 21, so as to mechanically constrain, and place in fluid communication, the first coupling terminal 21 with the tube 11 of the hydraulic braking system.

Similarly, a tubular portion 23 of the second coupling terminal 22 is stably coupled with the end portion 21 of the tube 12 of the hydraulic braking system and extends radially away from an axially outer portion 22a of the second coupling terminal 22 so as to mechanically constrain, and place in fluid communication, the second coupling terminal 22 with the second tube 12 of the hydraulic braking system.

The tubular portions 13, 23 have a smaller outer diameter than that of the inner axial portions 21b, 22b and intermediate portions 21c, 22c of the corresponding first coupling terminal 21 and second coupling terminal 22. The stable coupling of the tubular portions 13, 23 in the respective end portions of the tubes 11, 12 of the hydraulic braking system is obtained by making a plurality of projecting conical portions 23a on the radially outer surface of the aforementioned tubular portions 13, 23, said projecting conical portions being intended to mechanically interfere with the radially inner surface of the end portions of the two tubes 11, 12 of the hydraulic braking system.

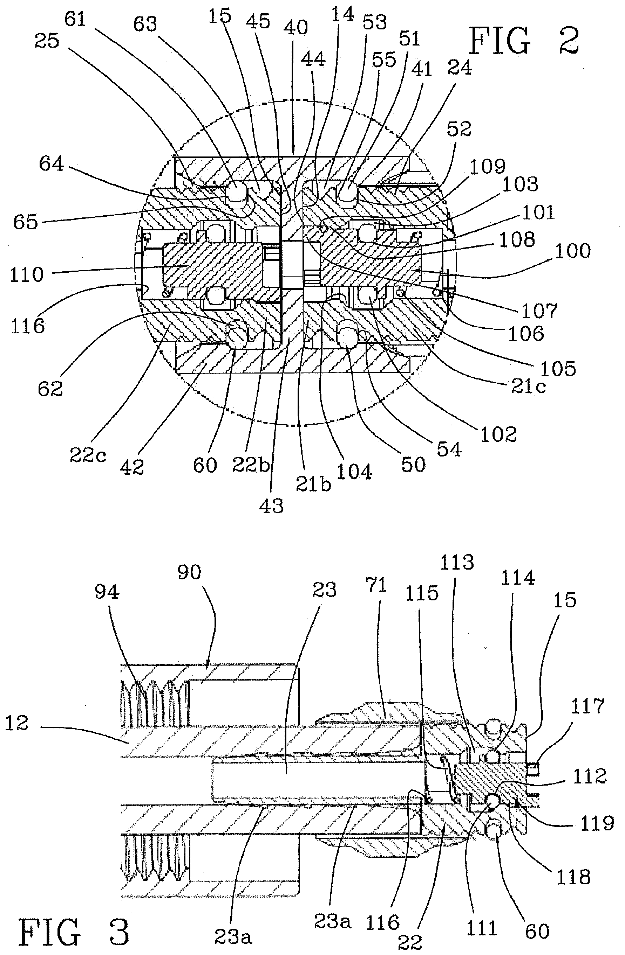

For the sake of simplicity of illustration, in the attached figures the reference numerals of the projecting conical portions 23a are associated only with some of the aforementioned projecting conical portions and only with the tubular portion 23, as shown in figure 3. The conicity of the aforementioned projecting conical portions 23a is such as to allow the insertion of the tubular portions 13, 23 in the respective end portions of the tubes 11, 12, nevertheless counteracting subsequent withdrawal thereof.

The projecting conical portions 23a allow quick and easy mounting of the first coupling terminal 21 and of the second coupling terminal 22 on the respective end portions of the tubes 11, 12. Furthermore, it is possible to reuse the first coupling terminal 21 and the second coupling terminal 22 by simply extracting the aforementioned tubular portions 13, 23 from the end portions of the respective tubes 11, 12.

The first coupling terminal 21 comprises, at an axially inner portion 21b thereof, an annular abutment wall 14 better illustrated in figure 2. An intermediate axial portion 21c of the first coupling terminal 21 is interposed between the aforementioned outer and inner axial portions 21a, 21b and is provided, on a radially outer surface thereof, with a plurality of throats 24.

The second coupling terminal 22 comprises, at an axially inner portion 22b thereof, an annular abutment wall 15 (figure 3). An intermediate axial portion 22c of the second coupling terminal 22 is interposed between the aforementioned outer and inner axial portions 22a and 22b and is provided, on a radially outer surface thereof, with a plurality of throats 25.

The connector 10 further comprises a coupling sleeve 40 having a substantially cylindrical shape. The coupling sleeve 40 comprises a first axially outer annular portion 41 and a second axially outer annular portion 42 opposite the first. Between the first 41 and the second axially outer annular portion 42 an annular wall 43 extends, which projects radially inside the coupling sleeve 40.

The first axially outer annular portion 41 of the coupling sleeve 40 has a greater inner diameter than the outer diameter of the first coupling terminal 21 so as to receive at least one axial portion thereof in engagement. Concerning this, the annular wall 43 has a first annular abutment surface 44 facing towards the first coupling terminal 21 and in particular directly facing the annular abutment wall 14 thereof. The first annular abutment surface 44 of the annular wall 43 and the annular abutment wall 14 are flat surfaces intended to be in mutual contact when the connector 10 is in operative configuration (as shown in figure 2).

Similarly, the second axially outer annular portion 42 of the coupling sleeve 40 has a greater inner diameter than the outer diameter of the second coupling terminal 22 so as to receive at least one axial portion thereof in engagement. Concerning this, the annular wall 43 has a second annular abutment surface 45 facing towards the second coupling terminal 22 and in particular directly facing the annular abutment wall 15 thereof. The second annular abutment surface 45 of the annular wall 43 and the annular abutment wall 15 are flat surfaces intended to be in mutual contact when the connector 10 is in operative configuration (as shown in figure 2).

In order to ensure a mechanical seal between the first coupling terminal 21 and the coupling sleeve 40 and between the latter and the second coupling terminal 22, there are first mechanical coupling members 50 and second mechanical coupling members 60 respectively radially interposed between the first coupling terminal 21 and the coupling sleeve 40 and between the second coupling terminal 22 and the coupling sleeve 40.

The first coupling members 50 comprise a locking ring 51 preferably made from metallic material housed in a first recess 52 formed in the axially inner annular portion 21b of the first coupling terminal 21 on the radially outer surface thereof. Such a locking ring 51 is radially deformable between a maximum inner diameter and a minimum inner diameter, wherein the minimum inner diameter is substantially equal to the radially inner circumference of the first recess 52. When the locking ring 51 has the minimum inner diameter, its radial bulk is completely contained in the radial bulk of the first coupling terminal 21. The deformation of the diameter of the locking ring 51 is ensured by the fact that the locking ring is an open ring having two mutually facing and spaced ends. When such two ends are close together, the diameter of the locking ring 51 has the minimum inner diameter, whereas when the two ends are spaced apart the diameter of the locking ring 51 has the maximum inner diameter. The passage of the locking ring 51 from the maximum inner diameter to the minimum inner diameter takes place by applying a force directed radially towards the center of the locking ring 51.

The first coupling members 50 further comprise a second recess 53 formed in the first axially outer portion 41 of the coupling sleeve 40 in a radially inner position thereof (figure 2). When the locking ring 51 has the maximum inner diameter, it is partially inserted in the second recess 53 and partially inserted in the first recess 52.

Similarly, the second coupling members 60 comprise a locking ring 61, a first recess 62 and a second recess 63 having the same features described above in relation to the locking ring 51, to the first recess 52 and to the second recess 53 of the first coupling members 50. Clearly, the first recess 62 of the second coupling members 60 is foreseen in the second coupling terminal 22 and the second recess 63 of the second coupling members 60 is foreseen in the second axially outer portion 42 of the coupling sleeve 40.

As illustrated in figure 2, when the annular abutment surface 14 of the first coupling terminal 21 abuts on the first annular abutment surface 44 of the coupling sleeve 40, the locking ring 51 of the first coupling members 50 is partially housed in the second recess 53 and partially housed in the first recess 52. In this configuration, an axially outer abutment wall 54 of the second recess 53 cooperates with an axially inner abutment wall 55 of the first recess 52 preventing movements directed in the axially outer direction of the locking ring 51 and thus of the first coupling terminal 21. In this way the first coupling terminal 21 is locked in position in the coupling sleeve 40.

Similarly, when the annular abutment surface 15 of the second coupling terminal 22 abuts on the second annular abutment surface 45 of the coupling sleeve 40, the locking ring 61 of the second coupling members 60 is partially housed in the second recess 63 and partially housed in the first recess 62. In this configuration, an axially outer abutment wall 64 of the second recess 63 cooperates with an axially inner abutment wall 65 of the first recess 62 preventing movements directed in an axially outer direction of the locking ring 61 and thus of the second coupling terminal 22. In this way, the second coupling terminal 22 is locked in position in the coupling sleeve 40.

A first annular hydraulic sealing element 70 is anchored on the radially outer surface of the end portion of the first tube 11 and of the intermediate portion 21c of the first coupling terminal 21.

Similarly, a second annular hydraulic sealing element 71 is anchored on the radially outer surface of the end portion of the second tube 12 and of the intermediate portion 22c of the second coupling terminal 22.

The first and the second annular hydraulic sealing element 70, 71 are preferably made from brass and defined by respective ogives. The first and the second annular hydraulic sealing element 70, 71 extend on the throats 24, 25 formed on the intermediate portions 21c, 22c of the first 21 and of the second coupling terminal 22.

The connector 10 further comprises a first annular locking element 80 and a second annular locking element 90 intended to be coupled together to reach a mechanical constraint condition illustrated in figures 1 and 2.

The first annular locking element 80 has an axially outer portion 81 slidably associated with the radially outer surface of the end portion of the first tube 11. The axially outer portion 81 comprises a recess 82 in which a ring 83 is housed. The ring 83 has an inner diameter slightly smaller than the outer diameter of the end portion of the first tube 11, so as to inhibit the free axial sliding of the first annular locking element 80 on the end portion of the first tube 11, in any case allowing the first locking element 80 to slide on the first tube when a user applies a force in the axial direction on the first locking element 80.

The first annular locking element 80 has an axially inner portion 84 having a greater inner diameter than the outer diameter of the coupling sleeve 40. Such an axially inner portion 84 has a threading on a radially outer surface thereof.

Similarly, the second annular locking element 90 has an axially outer portion 91 slidably associated with the radially outer surface of the end portion of the second tube 12. The axially outer portion 91 comprises a recess 92 in which a ring 93 is housed. The ring 93 has an inner diameter slightly smaller than the outer diameter of the end portion of the second tube 12, so as to inhibit the free axial sliding of the second annular locking element 90 on the end portion of the second tube 12, in any case allowing the second locking element 90 to slide on the second tube when a user applies a force in the axial direction on the second locking element 90.

The second annular locking element 90 has an axially inner portion 94 having an inner diameter greater than the outer diameter of the coupling sleeve 40 and greater than the outer diameter of the axially inner portion 84 of the first annular locking element 80. Such an axially inner portion 94 of the second annular locking element 90 has a threading matching the threading of the first annular locking element 80 on a radially inner surface thereof. In the assembly operations of the connector 10, the two threadings engage with each other, thus axially locking the first 80 and the second annular locking element 90 with respect to one another.

In the operative configuration of the connector 10, the first and the second annular hydraulic sealing element 70, 71 are respectively radially interposed between, on one side, the axially outer portion 84, 94 of the first 80 and of the second annular locking element 90 and, on the other side, an axially inner portion of the end portion of the first 11 and of the second tube 12 and the radially outer surface of the first 21 and of the second coupling terminal 22.

Furthermore, in the operative configuration of the connector 10, the first and the second annular hydraulic sealing element 70, 71 are respectively in axial abutment with, on one side, the axially outer portion 81, 92 of the first 80 and of the second annular locking element 90 and, on the other side, the first 41 and the second axially outer portion 42 of the coupling sleeve 40.

The coupling sleeve 40 and the annular locking elements 80, 90 are preferably made from steel or aluminum or aluminum alloy.

Due to the pushing action exerted on the first and on the second annular hydraulic sealing element 70, 71 by the first 80 and by the second annular locking element 90 during the mutual coupling thereof, and the consequent counteraction imparted on the axially inner end portions 70a, 71a of the first and of the second annular hydraulic sealing element 70, 71 by the axially outer portions 41, 42 of the coupling sleeve 40, the opposite axially outer end portions 70b, 71b and the axially inner end portions 70a, 71a of the annular hydraulic sealing elements 70, 71 undergo a deformation by chamfering. Following this deformation, the axially inner end portions 70a, 71a of the annular hydraulic sealing elements 70, 71 are partially embedded, respectively, in at least part of the throats 24, 25 formed on the outer surface of the first 21 and of the second coupling terminal 22.

In the embodiment of figures 1 to 3, the connector 10 comprises a first sealing slider 100 arranged inside the first coupling terminal 21 and axially slidable with respect to it. The first sealing slider 100 is apt to be switched into a first position in which it prevents the passage of oil inside the first coupling terminal 21, therefore isolating the end of the tube to which the first coupling terminal 21 is connected from the outside.

The fluid-tight seal between the first sealing slider 100 and the first coupling terminal 21 is preferably actuated by an annular gasket 102 arranged in an annular housing 101 formed in radially outer position of the first sealing slider 100 and by a radially inner annular recess 103 with respect to the first coupling terminal 21. The annular recess 103 is delimited in the axially inner direction by an annular sealing wall 104. The annular gasket 102 emerges partially in the radially outer direction from the annular housing 101 and contacts the aforementioned sealing wall 104 when the first sealing slider 100 is in the first position.

In order to ensure the stability of the first position of the first sealing slider 100 and to avoid it accidentally moving from such a position, a spring 105 is active on the first sealing slider 100 and exerts a force directed axially internally on it. Preferably, the spring 105 is a linear spring axially arranged between an axially outer portion of the first sealing slider 100 and a shoulder 106 formed in a radially inner position in the first coupling terminal 21.

The first sealing slider 100 is apt to be switched into a second position in which it allows the passage of oil in the first coupling terminal 21 allowing the hydraulic connection of the first tube with the second tube.

Concerning this, the first sealing slider 100 comprises a projection 107 that extends axially away from an axially inner portion of the first slider 100. Such a projection 107, when the first coupling terminal 21 is not inserted or is not completely inserted in the coupling sleeve 40, projects axially in an inner direction outside of the bulk offered by the first coupling terminal 21. In this way, when the first coupling terminal 21 is inserted in the coupling sleeve 40 and the annular abutment surface 14 of the first coupling terminal 21 abuts on the first annular abutment surface 44 of the coupling sleeve 40, the projection 107 contacts the first annular abutment surface 44 and causes the withdrawal of the first sealing slider 100 in an axially outer direction (as shown in figures 1 and 2) switching it into the second position.

The fluid-tight seal of the first slider 100 with the first coupling terminal 21 is therefore advantageously ensured so long as the first coupling terminal 21 is completely engaged on the coupling sleeve 40.

Preferably, in order to avoid the pressure of the oil of the hydraulic circuit (when the connector 10 is in its operative configuration) being able to push the first sealing slider 100 inside the first coupling terminal 21 into a too axially outer position, the first coupling terminal 21 comprises a stop shoulder 108 able to be abutted by a stop tooth 109 of the first sealing slider 100. The stop tooth 109 is formed in a radially outer position on the first sealing slider 100. The stop shoulder 108, which acts as an end stop for a possible further movement of the first slider 100 in an axially outermost direction with respect to the second position of the first slider 100, is arranged on a radially inner surface of the first coupling terminal 21.

In the embodiment of figures 1 to 3, the connector 10 comprises a second sealing slider 110 totally identical to the first sealing slider 100 but slidably inserted inside the second coupling terminal 22.

The second sealing slider 110 is apt to be switched into a first position in which it prevents the passage of oil inside the second coupling terminal 22 therefore isolating the end of the second tube to which the second coupling terminal 22 is connected from the outside.

The fluid-tight seal between the second sealing slider 110 and the second coupling terminal 22 is preferably actuated by an annular gasket 111 arranged in an annular housing 112 formed in a radially outer position of the second sealing slider 110 and by a radially inner annular recess 113 with respect to the second coupling terminal 21. The annular recess 113 is delimited in an axially inner direction by a substantially annular sealing wall 114. The annular gasket 111 emerges partially in radially outer direction from the annular housing 112 and contacts the aforementioned sealing wall 114 when the second sealing slider 110 is in the first position.

In order to ensure the stability of the first position of the second sealing slider 110 and prevent it from accidentally moving from such a position, a spring 115 is active on the second sealing slider 110 and exerts a force directed axially internally on it. Preferably, the spring 115 is a linear spring axially arranged between an axially outer portion of the second sealing slider 110 and a shoulder 116 formed in a radially inner position in the second coupling terminal 22.

The second sealing slider 110 is apt to be switched into a second position in which it allows the passage of oil in the second coupling terminal 22 allowing the hydraulic connection of the second tube with the first tube.

Concerning this, the second sealing slider 110 comprises a projection 117 that extends axially away from an axially inner portion of the second sealing slider 110. Such a projection 117, when the second coupling terminal 22 is not inserted or is not completely inserted in the coupling sleeve 40, projects axially in an inner direction outside of the bulk offered by the second coupling terminal 22. In this way, when the second coupling terminal 22 is inserted in the coupling sleeve 40 and the annular abutment surface 15 of the second coupling terminal 22 abuts on the second annular abutment surface 45 of the coupling sleeve 40, the projection 117 contacts the second annular abutment surface 45 and causes the withdrawal of the second sealing slider 110 in an axially outer direction (as shown in figures 1 and 2) switching it into the second position.

The fluid-tight seal of the second slider 110 with the second coupling terminal 22 is therefore advantageously ensured so long as the second coupling terminal 22 is completely engaged on the coupling sleeve 40.

Preferably, in order to prevent the pressure of the oil of the hydraulic circuit (when the connector 10 is in its operative configuration) being able to push the second sealing slider 110 inside the second coupling terminal 22 into an axially too outer position, the second coupling terminal 22 comprises a stop shoulder 118 able to be abutted by a stop tooth 119 of the second sealing slider 110 when the latter is in the second position. The stop tooth 119 is formed in a radially outer position on the second sealing slider 110. The stop shoulder 118, which acts as an end stop for the second slider 110, is arranged on a radially inner surface of the second coupling terminal 22.

In non-illustrated embodiments of the connector 10, the second slider 110 could not be present and the corresponding end of the second tube associated with the second coupling terminal 22 could thus not be closed fluid-tight when the second coupling terminal 22 is not engaged in the coupling sleeve 40.

In other embodiments of the connector 10, like for example the one illustrated in figures 4 and 5, the first slider 100 is not present and the corresponding end of the first tube associated with the first coupling terminal 21 is not closed fluid-tight when the first coupling terminal is not engaged in the coupling sleeve 40.

In the embodiment of figures 4 and 5, the component of the hydraulic braking circuit with which the first tube 11 is associated is a brake caliper 200.

Hereinafter, only the differences between the embodiment of figures 4 and 5 and the embodiment of figures 1 to 3 will be described, thus meaning that what is not expressly described of the connector 10 of the embodiment of figures 4 and 5 is identical to the connector 10 according to the embodiment described above.

The first coupling terminal 21 is equivalent in functional terms to the first coupling terminal 21 described above with reference to the embodiment according to figures 1 to 3. Clearly, since the first sealing slider 100 is not present, all of the features of the first coupling terminal 21 described and placed in functional or structural relationship with the first sealing slider 100 are not foreseen in this embodiment. In particular, the radially inner surface of the first coupling terminal 21 is, in this case, a cylindrical surface, as shown in figures 4 and 5.

Preferably, the connector 10 of the embodiment of figures 4 and 5 does not comprise the aforementioned first mechanical coupling members 50.

The brake caliper 200 comprises a cylindrical recess 202 intended to receive all of the components of the connector 10 arranged axially internally with respect to the first annular locking element 80, as illustrated in figure 4.

In particular, the cylindrical recess 202 houses the coupling sleeve 40 which in turn receives at least one part of the first coupling terminal 21, the first annular hydraulic sealing element 70 and the axially inner portion 84 of the first annular locking element 80 in engagement in its first axially outer annular portion 41.

The axially inner portion 84 of the first annular locking element 80 has an outer diameter substantially identical to the outer diameter of the coupling sleeve 40. The axially inner portion 84 has, on a radially outer surface thereof, a threading intended to engage a threading 201 formed on a radially inner surface of the cylindrical recess 202 of the brake caliper 200. The second annular sealing element 90 is not present in this embodiment.

In the operative configuration of the connector 10 of figures 4 and 5, the first annular hydraulic sealing element 70 is radially interposed on one side between the cylindrical wall of the recess 202 of the brake caliper 200 and, on the other side, between an axially inner portion of the end portion of the first tube 11 and a radially outer surface of the first coupling terminal 21.

Furthermore, the first annular hydraulic sealing element 70 is in axial abutment with, on one side, the axially inner portion 84 of the first annular locking element 80 and, on the other side, the first axially outer portion 41 of the coupling sleeve 40.

Due to the pushing action exerted on the first annular hydraulic sealing element 70 by the first annular locking element 80 and the consequent counteraction imparted on the axially inner end portions of the first annular hydraulic sealing element 70 by the axially outer portion 41 of the coupling sleeve 40, the opposite axial end portions of the first annular hydraulic sealing element 70 undergo a deformation by chamfering. Following this deformation, the axially inner end portion 70a of the annular hydraulic sealing element 70 is partially embedded in at least part of the throats 24 formed on the outer surface of the first coupling terminal 21.

Preferably, the second axially outer portion 42 of the coupling sleeve 40 comprises an annular groove 46 arranged in outer radial position. The brake caliper 200 has a hole 203 having axis of extension perpendicular to the axis of extension of the recess 202 and in part passing through it in a radially outer portion thereof facing the annular groove 46 of the coupling sleeve 40 when it is inserted in the recess 202 of the brake caliper. A pin 204 is inserted in the hole 203, said pin intercepting a portion of the annular groove 46 of the coupling sleeve 40 facing the hole 203, preventing axial movements of the coupling sleeve 40 inside the recess 202.

Preferably, the second axially outer portion 42 of the coupling sleeve 40 further comprises an annular throat 47 arranged in a radially outer position inside which a toroidal gasket 48 is inserted that abuts the cylindrical wall of the recess 202 of the brake caliper 200. In this way, the hydraulic seal of the brake caliper 200 with the second axially outer portion 42 of the coupling sleeve 40 is ensured, avoiding oil leaks inside the recess 202.

The second axially outer portion 42 of the coupling sleeve 40 is in fluid communication with the first axially outer portion 41 and therefore with the tube of the hydraulic braking system. The second axially outer portion 42 is furthermore in fluid communication with a duct 205, inside the brake caliper 200, for connecting to the jaws of the brake caliper 200.

In the embodiment of figures 4 and 5, inside the second axially outer portion 42 of the coupling sleeve 40 a sealing slider 120 having the same structures features as the first 100 and the second sealing slider 110 described above with reference to the embodiment of figures 1 to 3 is slidably inserted in the axial direction.

In the embodiment shown in figures 4 and 5, therefore, the second coupling terminal 22 according to the embodiment of figures 1 to 3 is not present.

In particular, the sealing slider 120 of the brake caliper is moveable between a first position in which it prevents the passage of oil in the brake caliper and a second position in which it allows the passage of oil from and towards the brake caliper 200.

The fluid-tight seal between the sealing slider 120 of the brake caliper and the second axially outer portion 42 of the coupling sleeve 40 is preferably actuated by an annular gasket 121 arranged in an annular housing 122 formed in a radially outer position in the sealing slider 120 of the brake caliper and by an annular recess 123 radially inside the second axially outer portion 42 of the coupling sleeve 40. The annular recess 123 is delimited in the axially inner direction by a substantially annular sealing wall 124. The annular gasket 121 emerges partially in the radially outer direction from the annular housing 122 and contacts the aforementioned sealing wall 124 when the sealing slider 120 of the brake caliper is in the first position.

In order to ensure the stability of the first position of the sealing slider 120 of the brake caliper and prevent it from being able to accidentally move, a spring 125 is active on the sealing slider 120 of the brake caliper and exerts a force directed axially internally on it. Preferably, the spring 125 is a linear spring axially arranged between an axially outer portion of the sealing slider 120 of the brake caliper and a shoulder 126 formed in a radially inner position in the second axially outer portion 42 of the coupling sleeve 40 or on the bottom of the recess 202 of the brake caliper 200.

In order to allow the movement into the second position, the sealing slider 120 of the brake caliper comprises a projection 127 that extends axially away from an axially inner portion of the sealing slider 120 of the brake caliper. Such a projection 127, when the first coupling terminal 21 is not inserted or is not completely inserted in the coupling sleeve 40, projects axially in the inner direction beyond the annular wall 4e of the coupling sleeve 40.

In this embodiment, the first annular abutment surface 44 of the annular wall 43 of the coupling sleeve 40 receives the annular abutment surface 14 of the first coupling terminal 21 in abutment, exactly like in the embodiment according to figures 1 to 3. The second annular abutment surface 45 of the annular wall 43, on the other hand, defines the aforementioned sealing wall 124 of the coupling sleeve 40.

When the first coupling terminal 21 is inserted in the coupling sleeve 40 and the respective annular abutment surface 14 abuts on the first annular abutment surface 44 of the coupling sleeve 40, the projection 127 of the sealing slider 120 of the brake caliper contacts the first sealing terminal 21, and in particular the annular abutment surface 14, and causes the withdrawal of the sealing slider 120 of the brake caliper in an axially outer direction (as shown in figure 5) switching it into the second position.

In the embodiment shown in figure 6 the connector 10 is identical to that of the embodiment illustrated in figures 4 and 5 except for the fact that the first coupling terminal 21 is equipped with the first sealing slider 100 exactly like in the embodiment according to figures 1 to 3. As stated, the coupling sleeve 40, the brake caliper 200 and the sealing slider 120 of the brake caliper are those described in relation to figures 4 and 5. In this embodiment the movement of the sealing sliders 100, 120 from the respective first positions towards the respective second positions takes place following the axial abutment between the projection 107 of the sealing slider 100 and the projection 127 of the sealing slider 120.

In some embodiments an accessory 300 is foreseen to prevent the projection 107, 117 of the sealing slider, be it the first sealing slider 100 or the second sealing slider 110, from being able to be damaged before using the connector 10.

Figures 7 and 8 represent two embodiments of such an accessory 300 applied to the second sealing slider 110. The following description will therefore refer to the second sealing slider 110, although it should still be considered valid in the case of the first sealing slider 100.

In the first embodiment of the accessory 300 illustrated in figure 7, it comprises an internally hollow containment body 301 having a first opening 301c at a first end 301a. The containment body 301 has a radially outer wall 302 and a radially inner wall 303, the latter facing and delimiting the inner cavity. At the first end 301a the radially inner wall 303 comprises fastening members 304 configured to fasten and constrain the containment body 301 to the coupling terminal (in the embodiment illustrated here, to the second coupling terminal 22).

Preferably, the fastening members 304 comprise a plurality of projections and annular recesses 305 formed on the inner wall of the containment body 301 at the first end 301a. Such a plurality of projections and annular recesses 305 is configured to couple with respective projections and annular recesses 22d arranged on the radially outermost surface of the second coupling terminal 22.

Preferably, such a plurality of projections and annular recesses 22d of the second coupling terminal 22 is made on the axially inner portion 22b thereof. The first end 301a of the containment body 301 therefore rides over at least part of the axially inner portion 22b of the second coupling terminal 22, preventing free access to the projection 117 of the second sealing slider 110. By removing the mutual engagement between the plurality of throats and recesses 305 of the containment body and the plurality of throats and recesses 22d of the second coupling terminal 22, the accessory 300 can be removed from the second coupling terminal 22.

Preferably, the accessory 300 is made from plastic material, even more preferably plastic material having a modulus of elasticity (Young's modulus) that is greater than the modulus of elasticity of the material from which the second coupling terminal 22 is made, so as to be able to deform elastically and allow its own plurality of throats and recesses 305 to disengage from the throats and recesses 22d of the second coupling terminal 22.

In this embodiment, the containment body 301 comprises a second opening 301d at a second end 301b opposite the first end 301a. Such a second opening 301d is passed through by a pin 306 having, at its first end, a bulb 307. The bulb 307 is inserted inside the cavity defined by the containment body 301 and has dimensions such as not to be able to cross the second opening 301d arranged at the second end 301b of the containment body 301.

In this embodiment of the accessory 300, by exerting a force on the portion of pin emerging from the second opening 301d, it is possible to elastically deform the containment body 301 facilitating the disengagement thereof from the second coupling terminal 22.

In a second embodiment of the accessory 300, shown in figure 8, it comprises a containment body 400 made from an elongated body 401 wound in a spiral. The elongated body 401 is preferably cylinder shaped and is made from flexible material in order to be able to be wound in coils.

At least one, preferably a plurality of coils 402 that form a first end 400a of the containment body 400 are wound around the axially inner end of the second coupling terminal 22. The second end 400b of the containment body is given by a coil 402 ending with a free end able to be gripped by a user. The coils 402 that extend between the coil of the first end 400a of the containment body 400 and the coil of the second end 400b of the containment body 400 preferably have decreasing diameters proceeding from the first end 400a towards the second end 400b of the containment body 400.

Preferably, all of the coils 402 with the exception of the coil of the second end 400b of the containment body are glued together so as not to be able to accidentally unwind. By gripping and pulling the free end of the coil of the second end 400b of the containment body 400, the coils 402 become unglued and unwind, freeing the end of the second coupling terminal 22.

Of course, those skilled in the art can apply numerous modifications and variants to the invention described above, in order to satisfy specific and contingent requirements, all of which are in any case encompassed by the scope of protection of the present invention as defined by the following claims.

## Claims

1. Connector (10) for a hydraulic braking system, comprising:
- a first coupling terminal (21), associated with a tube (11) of a hydraulic braking system, comprising an axially inner annular portion (21b) equipped with an annular abutment surface (14);
- a coupling sleeve (40) comprising a first axially outer annular portion (41) configured to receive said axially inner annular portion (21b) of the first coupling terminal (21) in a radially inner position; said coupling sleeve (40) comprising an annular wall (43) projecting radially internally, arranged axially internally with respect to said first axially outer annular portion (41), and equipped with a first annular abutment surface (44) configured to receive in abutment said annular abutment surface (14) of the first coupling terminal (21); said coupling sleeve (40) comprising a second axially outer annular portion (42), axially opposite said first annular portion (41), configured to be coupled with a component of the hydraulic braking system;
- a first annular locking element (80) configured to be arranged in a radially outer position with respect to the tube (11) and to the first coupling terminal (21) and axially moveable between a rest position in which it is mechanically decoupled from said component of the hydraulic braking system and a locking position in which it is mechanically coupled with said component of the hydraulic braking system;
- a first annular hydraulic sealing element (70), configured to be arranged in a radially outer position with respect to the tube (11) of the hydraulic braking system and in a position axially interposed between the coupling sleeve (40) and the first annular locking element (80), and configured to be activated from said first annular locking element (80) when in the locking position;
wherein said annular abutment surface (14) of the first coupling terminal (21) is in abutment on said first annular abutment surface (44) of the coupling sleeve (40) when said first annular locking element (80) is in the rest position.

2. Connector (10) according to claim 1 wherein when said first annular locking element (80) is in the locking position, the first annular hydraulic sealing element (70) is in axial abutment against said coupling sleeve (40) and, in axially opposite position, against the first annular locking element (80) and undergoes a deformation by chamfering at an axially inner end portion (70a) adjacent to the coupling sleeve (40).

3. Connector (10) according to claim 2, wherein the first annular hydraulic sealing element (70) further undergoes a deformation by chamfering at an axially outer end portion (70b) opposite said axially inner end portion (70a).

4. Connector (10) according to any one of the previous claims, wherein said first coupling terminal (21) comprises, at an intermediate axial portion (21c) thereof, a radially outer surface provided with a plurality of throats (24).

5. Connector (10) according to any one of the previous claims, comprising first coupling members (50) configured to be radially interposed between said first coupling terminal (21) and said coupling sleeve (40) to hold said first coupling terminal (21) coupled with said coupling sleeve (40) when said annular abutment surface (14) of the first coupling terminal (21) is in abutment on said first annular abutment surface (44) of the coupling sleeve (40).

6. Connector (10) according to claim 5, wherein said first coupling members (50) comprise a locking ring (51) housed in a first recess (52) formed in said axially inner annular portion (21b) of said first coupling terminal (21) in a radially outer position thereof and houseable, when said annular abutment surface (14) of the first coupling terminal (21) is in abutment on said first annular abutment surface (44) of the coupling sleeve (40), in a second recess (53) formed in said first axially outer annular portion (41) of said coupling sleeve (40) in a radially inner position thereof.

7. Connector (10) according to any one of the previous claims, comprising a first sealing slider (100) axially slidable in said first coupling terminal (21) between a first position in which it inhibits the passage of fluid in said first coupling terminal (21) and a second position in which it allows the passage of fluid in said first coupling terminal (21); said annular wall (43) moving said first sealing slider (100) from the first to the second position when said annular abutment surface (14) of the first coupling terminal (21) is in abutment on said first annular abutment surface (44) of the coupling sleeve (40).

8. Connector (10) according to claim 7, wherein said first sealing slider (100) comprises, in an axially inner position, at least one projection (107) configured to abut on said first annular abutment surface (44) of the coupling sleeve (40) when said annular abutment surface (14) of the first coupling terminal (21) is in abutment on said first annular abutment surface (44) of the coupling sleeve (40).

9. Connector according to claim 7 or 8, comprising an elastic member (105) active on said first sealing slider (100) to hold it in the first position, the movement of the first sealing slider (100) into the second position being counteracted by said elastic member (105).

10. Connector (10) according to any one of claims 7 to 9, wherein said first sealing slider (100) comprises an annular gasket (102) inserted in a radially outer annular housing (101) of the first sealing slider (100) and said first coupling terminal (21) comprises a radially inner annular recess (103) delimited in an axially inner direction by a sealing wall (104); said annular gasket (102) contacting said sealing wall (104) in a fluid-tight manner when the first sealing slider (100) is in the first position and being in an axial position distal from said sealing wall (104) when the first sealing slider (100) is in the second position.

11. Connector (10) according to any one of claims 7 to 10, wherein said first coupling terminal (21) comprises a stop shoulder (108) in axial abutment on a stop tooth (109) of said first sealing slider (100) when it is in the second position.

12. Connector (10) according to any one of the previous claims, wherein said component of the hydraulic braking system comprises a second coupling terminal (22), associated with a further tube (12) of the hydraulic braking system, comprising an axially inner annular portion (22b) equipped with an annular abutment surface (15); the second axially outer annular portion (42) of said coupling sleeve (40) being configured to receive said axially inner annular portion (22b) of the second coupling terminal (22) in a radially inner position.

13. Connector (10) according to claim 12, wherein said annular wall (43) of the coupling sleeve (40) is equipped with a second annular abutment surface (45), axially opposite the first annular abutment surface (44), configured to receive said annular abutment surface (15) of the second coupling terminal (22) in abutment.

14. Connector (10) according to claim 13, comprising a second annular locking element (90) configured to be arranged in a radially outer position with respect to the further tube (12) and axially moveable between a rest position wherein it is mechanically decoupled from the first annular locking element (80) and a locking position wherein it is mechanically constrained to the first annular locking element (80); said annular abutment surface (15) of the second coupling terminal (22) being in abutment on said second annular abutment surface (45) of the coupling sleeve (40) when the second annular locking element (90) is in the rest position.

15. Connector (10) according to any one of claims 12 to 14, comprising second coupling members (60) configured to be radially interposed between said second coupling terminal (22) and said coupling sleeve (40) to hold said second coupling terminal (22) in said coupling sleeve (40) when said annular abutment surface (15) of the second coupling terminal (22) is in abutment on said second annular abutment surface (45) of the coupling sleeve (40).

16. Connector according to claim 15, wherein said second coupling members (60) comprise a locking ring (61) housed in a first recess (62) formed in said axially inner annular portion (22b) of said second coupling terminal (22) in a radially outer position thereof and houseable, when said annular abutment surface (15) of the second coupling terminal (22) is in abutment on said second annular abutment surface (45) of the coupling sleeve (40), in a second recess (63) formed in said second axially outer annular portion (42) of said coupling sleeve (40) in a radially inner position thereof.

17. Connector according to any one of claims 12 to 16, comprising a second sealing slider (110) axially slidable in the second coupling terminal (22) between a first position in which it inhibits the passage of fluid in the second coupling terminal (22) and a second position in which it allows the passage of fluid in the second coupling terminal (22); said second sealing slider (110) being in axial abutment against said second annular abutment surface (45) of the coupling sleeve (40) when said second sealing slider (110) is in the second position, and wherein said annular wall (43) moves said second sealing slider (110) from the first to the second position when said annular abutment surface (15) of the second coupling terminal (22) is in abutment on said second annular abutment surface (45).

18. Connector (10) according to any one of claims 1 to 11, wherein said component of the hydraulic braking system comprises a brake caliper (200) and a sealing slider (120) axially slidable in the second axially outer portion (42) of the coupling sleeve (40) between a first position in which it inhibits the passage of fluid in the brake caliper (200) and a second position in which it allows the passage of fluid in the brake caliper (200).

19. Connector (10) according to claim 18, wherein said sealing slider (120) of the brake caliper (200) is configured to go into axial abutment against a portion of said annular abutment surface (14) of said first coupling terminal (21) and to move from the first to the second position.

20. Connector (10) according to any one of the previous claims, comprising an accessory (300) comprising an internally hollow containment body (301) having a first end (301a) equipped with a first opening (301c) and comprising fastening members (304) to fasten and constrain to said first coupling terminal (21); said containment body (301) comprising a second opening (301d) opposite the first opening (301c) and a pin (306) fit-inserted in said second opening (301d); said containment body (301) being made of plastic material so as to be able to deform and disengage said fastening members (304) from said first coupling terminal (21).

21. Connector (10) according to any one of claims 1 to 19, comprising an accessory (300) comprising a containment body (400) made from an elongated body (401) wound in a spiral; at least one coil (402) of a first end (400a) of said spiral being wound around at least one portion of said first coupling terminal (21) and at least one coil (402) of a second end (400b) of said spiral having a free end able to be gripped by a user.
